# EUROPEAN PATENT SPECIFICATION

(11) **EP 2 688 796 B1**
(45) Date of publication and mention of the grant of the patent: **15.04.2015**
(21) Application number: 12707946.5
(22) Date of filing: 23.02.2012
(51) Int. Cl.: B63B 21/24, B63B 21/38

(54) **ANCHOR WITH AN OPTICAL MEASURING DEVICE**
ANKER MIT EINER OPTISCHEN MESSEINRICHTUNG
ANCRE AVEC UN DISPOSITIF DE MESURE OPTIQUE

(30) Priority: 21.03.2011 NL 2006438
(43) Date of publication of application: 29.01.2014
(73) Proprietor: STEVLOS B.V., 2901 LB Capelle aan den IJssel (NL)
(72) Inventor: VAN DEN ENDE, David Peter, NL-3284 LN Zuid-beijerland (NL); RUINEN, Roderick Michael, NL-2926 RC Krimpen Aan Den Ijssel (NL)
(74) Representative: Geurts, Franciscus Antonius
(86) International application number: PCT/NL2012/050107
(87) International publication number: WO 2012/128617

(56) References cited:
- WO-A1-2010/041929
- US-A1- 2004 229 531
- US-A1- 2010 123 904

## Description

### BACKGROUND OF THE INVENTION

The invention relates to an anchor, particularly for anchoring heavy maritime objects, such as a drilling platform, in an anchoring ground for a long period of use that may last many years.

A known anchor at an anchoring line is placed onto the anchoring ground from an installation ship, after which the installation ship pulls at the anchoring line to bring the anchor into the anchoring ground. At the end of the period of use the anchor is pulled out of the anchoring ground by pulling in the anchoring line. Both when introducing and pulling in the anchor it is of importance that the behaviour of the anchor in the anchoring ground can be reliably established. In the known anchor the movement of the anchor is calculated by means of prediction models on the basis of the tension in the anchoring line during pulling the anchoring line. The predicted displacement of the anchor may deviate from the actual displacement of the anchor.

It is an object of the invention to provide an anchor, wherein the displacement of the anchor with respect to the anchoring ground can be reliably ascertained.

Document WO 2010/041929 constitutes the closest prior art.

### SUMMARY OF THE INVENTION

According to a first aspect the invention provides an anchor with a measuring device that is fixedly attached to the anchor for measuring the displacement of the soil with respect to the anchor, wherein the measuring device is provided with a light source and an optical sensor, wherein the light source when operational emits a light beam illuminating a part of the soil opposite the measuring device, wherein the soil reflects at least a part of the light of the light beam in the direction of the measuring device, wherein the optical sensor comprises a light-sensitive sensor surface divided into segments, which surface per segment converts the light incident at the location of the segments into an electric signal which according to a predetermined ratio corresponds with the intensity of the incident light, wherein the measuring device is operationally connected to a calculation and data processing unit that converts the signals into a reproduction divided into segments, wherein the calculation and data processing unit is provided with a storage medium for storing reproductions at least at two consecutive moments in time and an electric circuit for recognising patterns in each of the stored reproductions, comparing the recognised patterns of two consecutive reproductions and on the basis of the comparison determining the displacement of the pattern between the two consecutive moments in time. The measuring device is able to measure the relative displacement of the soil with respect to the measuring device, which is a reliable parameter for the relative displacement of the anchor with respect to the soil.

In one embodiment the optical sensor comprises a plurality of light detectors that jointly form the segments of the light-sensitive sensor surface. The light detectors are able to convert the light incident per segment of the light-sensitive surface into an electric signal.

In one embodiment the segments of the light-sensitive sensor surface are arranged in several rows and columns. The signals of the segments can be processed by the calculation and data processing unit into a two-dimensional reproduction divided into segments. The two-dimensional reproduction makes it possible to recognise displacements of patterns in two directions.

In one embodiment the light source is provided with a light emitting diode or a laser. Both types of light sources are able to effect a contrasty illumination of the soil of the anchoring ground.

In one embodiment the light detectors comprise photodiodes. Photodiodes may have a more linear characteristic than light-sensitive resistors, and are moreover able to respond to light variations much more rapidly.

In one embodiment the measuring device comprises a housing that is provided with an inspection opening having a substantially transparent sight glass in it, wherein the light sensor is placed behind the sight glass in the housing and in the path of the light incident through the sight glass. The housing and sight glass are jointly able to counteract the penetration of water or dirt in the housing.

In one embodiment the sight glass is made of sapphire glass, particularly artificial sapphire glass, particularly artificial sapphire glass of crystallised aluminium oxide. Sapphire glass has the advantage of having few to no pores and irregularities in the surface. Moreover sapphire glass has a particularly high hardness, as a result of which wear of and scratching the surface of the sight glass due to soil sliding past it can be counteracted.

In one embodiment the measuring device is provided with a lens in the path of the reflected light, wherein the focal distance of the lens is situated in or at the light-sensitive sensor surface. The lens is able to converge the incident, reflected light rays to the light detectors of the light-sensitive sensor surface. In that way a more distinct or focused representation of the soil sliding past can be obtained.

In one embodiment the anchor has a longitudinal plane of symmetry, wherein the light-sensitive sensor surface extends substantially parallel to the longitudinal plane of symmetry. The longitudinal plane of symmetry extends substantially parallel to the vertical plane in the soil, as a result of which the light-sensitive sensor surface is able to ascertain displacements parallel to the vertical plane of the soil.

In one embodiment the anchor comprises a fluke and a shank that is upright with respect to the fluke, wherein the shank comprises a plate section extending substantially parallel to the longitudinal plane of symmetry and bearing the measuring device. The longitudinal plane of symmetry and the plate section extend substantially parallel to the vertical plane in the soil, as a result of which the light-sensitive sensor surface is able to ascertain displacements parallel to the vertical plane of the soil.

In one embodiment the anchor is provided with an inclinometer, so that in addition to the measured relative displacement of the soil with respect to the measuring device also the movements of the anchor with respect to a notional plane can be determined, which is a parameter for the pitch and roll of the anchor.

In one embodiment the calculation and data processing unit is accommodated in the housing. The measuring device can as a result provide processed data about the displacement of the soil with respect to the anchor and/or the displacement of the anchor with respect to the soil.

In one embodiment the anchor is provided with a transmitter for wireless data transmission from the transmitter to a vessel located at the water surface. On the vessel the data can be visually shown on a display. With the feedback of the visual data the captain of the vessel is able to adjust the force on the anchoring line in order to influence the introduction path or the retraction path of the anchor.

In one embodiment the calculation and data processing unit is disposed on the vessel. As the data need not be processed first, but can be forwarded unprocessed, the electronics in the measuring device can be simplified, which reduces the risk of the electronics breaking down or failing.

According to a second aspect the invention provides an optical measuring device, suitable to be used on the anchor described above. The optical measuring device can be placed as a separate part on any anchor provided that during the processing or interpretation of the data, the location of the measuring device on the anchor is taken into account.

According to a third aspect the invention provides a method for measuring the anchor displacement of an anchor in soil of an anchoring ground, wherein the anchor is provided with a measuring device that is fixedly attached to the anchor for measuring displacement of the soil with respect to the anchor, wherein the measuring device is provided with a light source and an optical sensor, wherein the optical sensor comprises a plurality of light detectors that jointly form a light-sensitive sensor surface, wherein each light detector covers a segment of the light-sensitive sensor surface, wherein the measuring device is operationally connected to a calculation and data processing unit that is provided with a storage medium and an electric circuit, wherein the method comprises: exerting a pulling force on an anchoring line connected to the anchor in order to introduce the anchor into soil of an anchoring ground according to a penetration path; by means of the light source emitting a light beam, wherein the light beam illuminates a part of the soil opposite the measuring device, wherein the soil reflects at least a part of the light of the light beam in the direction of the measuring device, by means of the light detectors converting light incident at the location of the segments and reflected from the soil into electric signals which according to a predetermined ratio correspond with the intensity of the incident light per segment; at a first moment by means of the calculation and data processing unit converting the electric signals of the light detectors into a first reproduction divided into segments; storing the first reproduction in the storage medium; at a second moment consecutive to the first moment by means of the calculation and data processing unit converting the electric signals of the light detectors into a second reproduction divided into segments; storing the second reproduction in the storage medium; by means of the electric circuit recognising patterns in the first reproduction and the second reproduction; comparing the recognised patterns of the first reproduction and the second reproduction; on the basis of the comparison determining the displacement of the pattern between the first reproduction and the second reproduction. The measuring device is able to measure the relative displacement of the soil with respect to the measuring device, which is a reliable parameter for the relative displacement of the anchor with respect to the soil.

In one embodiment the anchor is provided with an inclinometer, wherein the method comprises: on the basis of the data of the inclinometer determining the position of the anchor during measuring the displacement of the pattern, adjusting the measured displacement of the pattern on the basis of the deviation of the position of the anchor with respect to its regular horizontal position. Depending on the deviating position of the anchor as measured by the inclinometer, the data of the anchor displacement can be adjusted, so that the measured horizontal displacement and the vertical displacement within the light-sensitive surface do actually correspond with the notional horizontal plane perpendicular to the gravitational direction and the notional vertical plane in which gravity is active, respectively.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
figure 1 shows a side view of an anchor according to the invention that has been introduced into soil of an anchoring ground, having a measuring device for the optical measuring of the displacement of the anchor with respect to the soil of the anchoring ground;
figure 2 shows an isometric front view of the anchor according to figure 1;
figure 3 shows an isometric front view of the optical measuring device according to the circle III of figure 2;
figure 4 shows a view of the optical measuring device according to figure 3 in disassembled condition;

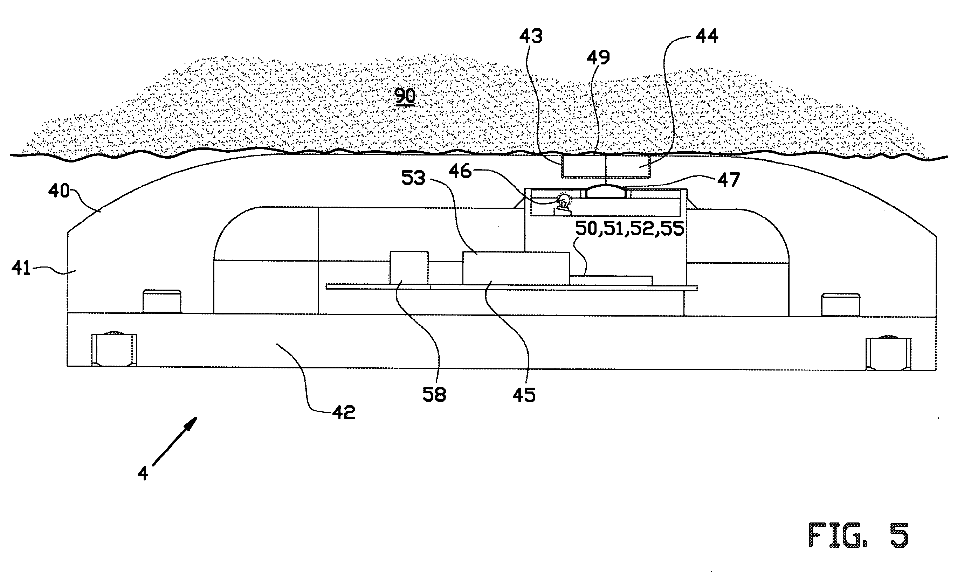

figure 5 shows a longitudinal section of the optical measuring device according to the line V-V in figure 3;
figure 6 shows a view in perspective of details of the optical measuring device according to figure 5;
figure 7A-D show depictions of how the optical measuring device according to figure 3 works.

### DETAILED DESCRIPTION OF THE DRAWINGS

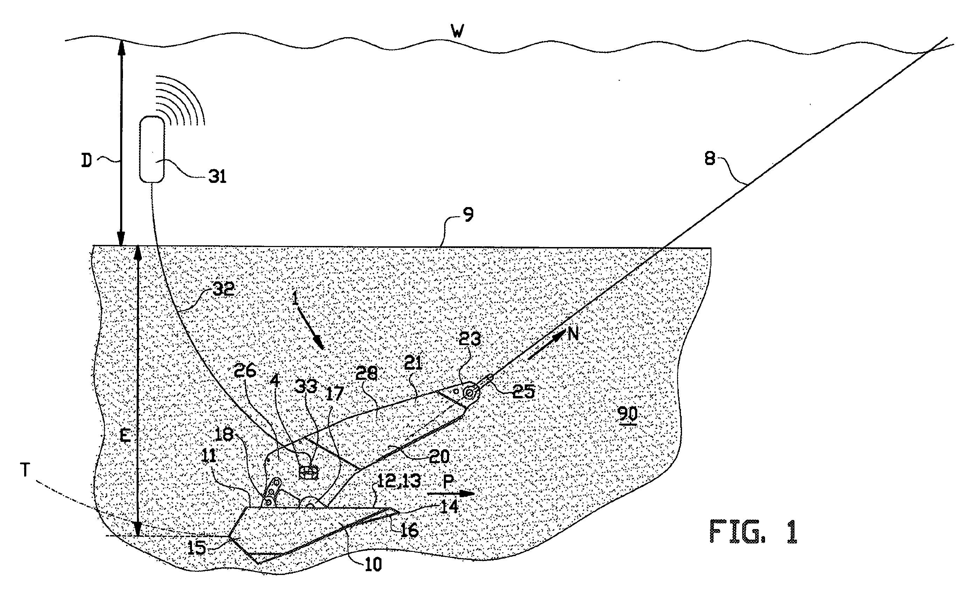

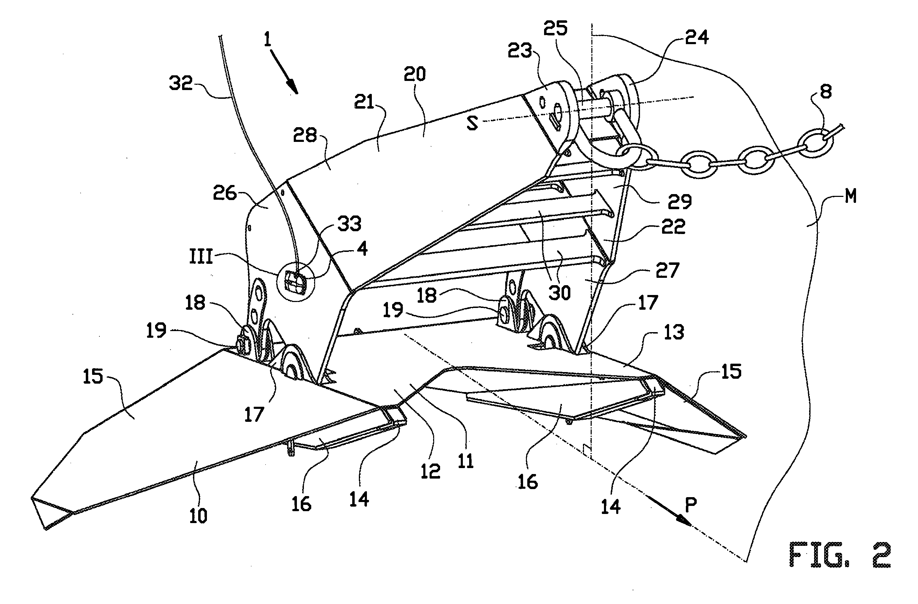

Figures 1 and 2 show a steel anchor 1 according to an embodiment of the invention. The anchor 1 is adapted for anchoring heavy maritime objects, such as a drilling platform that is not shown further, in soil 90 of an anchoring ground 9 for a long period of use that may last many years. The soil 90 is a composition of clay and sand. The anchor 1 comprises a fluke 10 and a forwardly inclined shank 20 that is upright from the fluke 10 and at its outer end provided with an anchoring line 8. The anchor 1 is substantially symmetrical with respect to its vertical longitudinal plane of symmetry M. In figure 1 a vertical cross-section of the soil 90 is shown, in order to expose its buried, subterranean anchored position. The anchor 1 is formed to be introduced into the anchoring ground 9 according to a penetration path T in a forward direction of penetration P substantially parallel to the longitudinal plane of symmetry M. In the opposite direction the anchor 1 can be pulled out of the anchoring ground 9.

As shown in figure 2 the fluke 10 is constructed with plate parts and at the rear side over its width comprises a base plate 11 which at the front on both sides of centre longitudinal plane M merges into a first triangular front end 12 and a second triangular front end 13, respectively, which in the penetration direction P end in tips 14. At the sides the base plate 11 merges into two diagonally downwardly oriented side plates 15. From the tips 14, below the front ends 12 two parallel longitudinal girders 16 extend below the base plate 11 in order to reinforce them. Above the base plate 11 at the location of the longitudinal girders 16 the fluke 10 is provided with upright attachment lips 17, 18 with attachment pins 19 with which the fluke 10 is coupled to the shank 20.

The shank 20 is constructed with a first plate-shaped shank leg 21 and a second plate-shaped shank leg 22 which on a first side are provided with fixing holes through which securing pins 19 extend for coupling the shank 20 to the fluke 10. At a second outer end facing away from the fluke 10, the first shank leg 21 and the second shank leg 22 are provided with a first end ear 23 and a second end ear 24, respectively. Between the end ears 23, 24 a coupling element 25 is accommodated for coupling the anchor 1 to an anchoring line 8. The coupling element 25 can be provided with electronics capable of measuring the deformation of the coupling element 25 as a result of the pulling force of the anchoring line 8 on the coupling element 25. From the fluke 10, the first shank leg 21 and the second shank leg 22 with a first plate section 26 and a second plate section 27 extend parallel to each other and to the longitudinal plane of symmetry M in an upwardly inclined direction. Subsequently the first plate section 26 and the second plate section 27 merge into a third plate section 28 and a fourth plate section 29, respectively, which in upward direction incline towards each other or converge. Along their length the shank legs 21, 22 are connected to each other by means of transverse plates 30.

As shown in figure 1 the anchor 1 is provided with an optical measuring device 4 that is arranged on the first plate section 26 of the anchor 1. The anchor 1 further comprises an acoustic modem 31 or another suitable communication means for transmitting data to an installation ship that is not shown and/or receiving data from the installation ship that is not shown. The modem 31 is coupled to the optical measuring device 4 via a communication cable 32 and a pull relief 33. The communication cable 32 has a length counteracting that the modem 31 disappears below the anchoring ground 9. In an alternative embodiment that is not shown, the modem 31 can also be fixedly arranged on the anchor 1, for instance adjacent the optical measuring device 4 on the first plate section 26. The modem 31 in that case disappears below the anchoring ground 9 in the soil 90. The strength of the signal transmitted by the modem 31 then has to be adjusted so that the modem 31 at a certain depth, for instance six metres, suffices to pass through the soil 90 and reach the installation ship. The installation ship is provided with an acoustic modem that is not shown, for communication with the modem 31 on the anchor 1. In an alternative embodiment that is not shown, the anchor 1 is provided with a communication cable that for instance extends up to the installation ship. With such a communication cable the optical measuring device 4 can be supplied with electricity from the installation ship.

Prior to the situation as shown in figure 1, the anchor 1 was in a first position on the anchoring ground 9 at depth D. The installation ship has exerted a force N on the anchor 1 via the anchoring line 8, as a result of which the anchor 1 from the first position described above has gone through a penetration path T up to a second position as shown in figure 1 at a certain depth E in the anchoring ground 9. The anchor 1 and the optical measuring device 4 fixedly attached thereto are then fully surrounded by the soil 90 of the anchoring ground 9. When the anchor moves through the soil 90, the soil slides relative with respect to the anchor 1 past the measuring device 4.

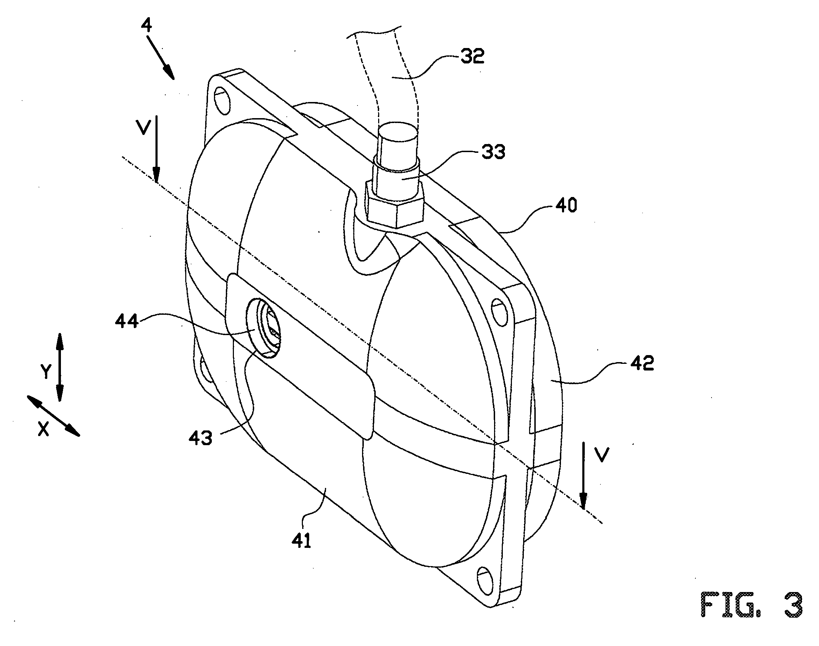

As shown in figure 3, the optical measuring device 4 is provided with a first shell member 41 and a second shell member 42 which jointly form a pressure housing 40. The shell members 41, 42 are placed tightly against each other by bolts 48 and then connect to each other seamlessly, for instance by means of a watertight sealing or glued joint, in order to protect electric components to be described further and accommodated in the pressure housing 40 against the water outside of the pressure housing 40. The electric components are fed by a battery or a supply cable that is not shown and that is connected to an external electricity source. The communication cable 32 enters the pressure housing 40 via the pull relief 33, and at that location is connected to the electric components.

The first shell member 41 is provided with a circular inspection opening 43 and a circular sight glass 44 disposed in the inspection opening 43 and sealing the inspection opening 43 watertight. The sight glass 44 has an outer surface 49 which at the outside of the first shell member 41 connects flush to the first shell member 41, so that the soil 90 surrounding the anchor 1 and the optical measuring device 4 are able to smoothly slide over the outer surface 49 of the sight glass 44. The outer surface 49 extends substantially parallel to the first plate section 26 and the vertical longitudinal plane of symmetry M. The sight glass 44 is made of colourless, transparent or translucent diamond-like glass, particularly sapphire glass, in particular synthetic sapphire glass of crystallised aluminium oxide. Sapphire glass has the advantage of having few to no pores and irregularities in the surface. Moreover sapphire glass has a particularly high hardness, as a result of which wear of and scratching the outer surface 49 of the sight glass 44 due to soil 90 sliding past it can be counteracted.

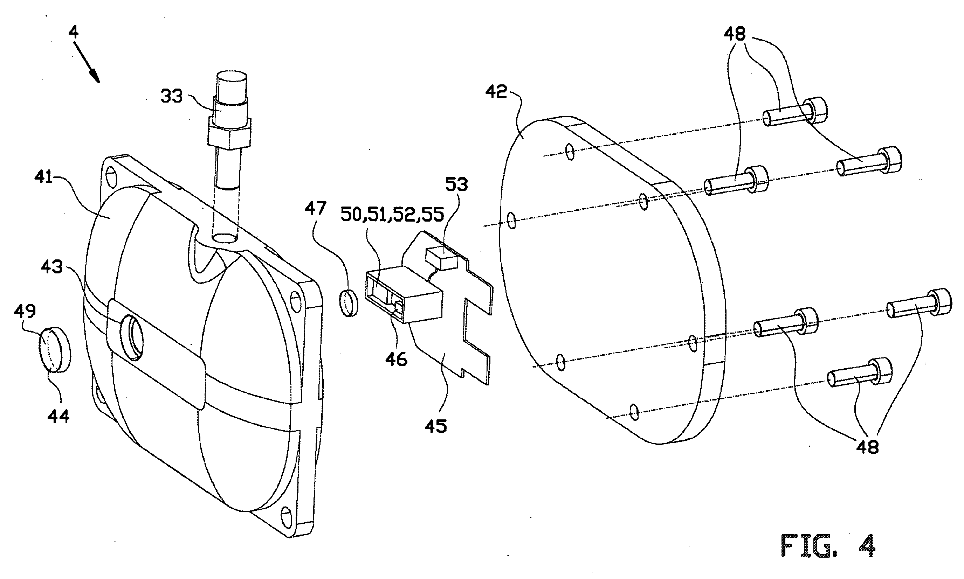

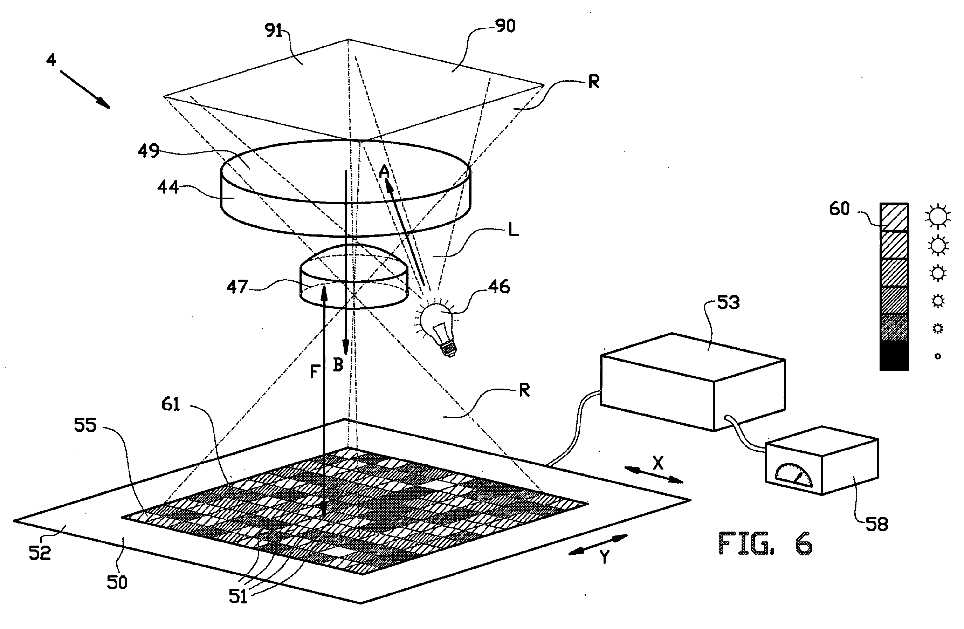

As shown in figure 4 the optical measuring device 4 is provided with a holder 45 which straight across the inspection opening 43 in the first shell member 41 is attached to the second shell member 42. The optical measuring device 4 comprises a light source 46, for instance a light emitting diode (LED) or a laser, that is fixedly disposed in or at the holder 45. As shown in figure 6 the light source 46 emits a light beam L from the holder 45, which light beam passes through the sight glass 44 at an emission angle A. Optionally a diffuse lens is disposed between the light source 46 and the sight glass 44 which lens diverges the light beam L emitted by the light source or makes the light beam diffuse. The light beam L illuminates a part 91 of the soil 90 of the anchoring ground 9 which at that moment is situated at the outside of the optical measuring device 4 in front of the outer surface 49 of the sight glass 44 or moves past it. To clarify how this works, the distance between the part 91 of the soil 90 and the outer surface 49 of the sight glass are schematically shown in figure 6 in a highly exaggerated manner. In reality the part 91 of the soil 90 will be situated just in front of or against the outer surface 49 of the sight glass 44. At least a part of the light beam L is reflected by the part 91 of the soil 90 and, as a plurality of reflection light rays R at a reflection angle B, different from emission angle A, is reflected back to the sight glass 44.

The optical measuring device 4 furthermore comprises an optical sensor 50 having a plurality of light detectors for receiving the reflection light rays R. The optical sensor 50 in this example comprises a plurality of photodiodes 51 that are placed in a group in a square grid or a matrix in order to form a light-sensitive sensor surface 55. The sensor surface 55 extends substantially parallel to the first plate section 26 and the vertical longitudinal plane of symmetry M. The photodiodes 51 are connected via a printed circuit-board 52 to a calculation and data processing unit 53, to which the photodiodes 51 individually give a signal that depends on the quantity of light detected by the individual photodiodes 51. The photodiodes 51 have a linear characteristic as regards the conversion of incident light into electric signals. Photodiodes 51 can moreover quickly respond to variations in light intensity.

As shown in figure 6 the anchor 1 is also provided with an inclinometer 58 which in this embodiment is accommodated in the optical measuring device 4. In an alternative embodiment that is not shown the inclinometer 58 can also be arranged on a different location at the anchor 1, for instance near or in the coupling element 25. The inclinometer 58 provides data about the pitch and roll or the angle of inclination and rolling motions of the anchor 1 with respect to gravity that is directed perpendicularly downwards and a notional horizontal plane that is at right angles thereto. The regular position of the anchor 1 is shown in figure 1, wherein the base plate 11 of the fluke 10 extends parallel to the notional horizontal plane and the shank 20 is positioned upright therefrom. The data of the inclinometer 58 are either directly combined in the calculation and data processing unit 53 of the optical measuring device 4, or are transmitted separately via the modem 31 to the installation ship, in order to be combined there with the data of the optical measuring device 4.

The optical measuring device 4 is provided with a lens 47 that is situated between the photodiodes 51 of the optical sensor 50 and the sight glass 44. The lens 47 has a focal distance F situated in the sensor surface 55 of the optical sensor 50 which surface is formed by the photodiodes 51, in order to converge the reflection light rays R incident through the sight glass 44 in the direction of the individual photodiodes 51. Due to the lens 47 a more distinct or focused representation of the soil 90 can be obtained. When choosing the distances between the lens 47, the sight glass 44 and the optical sensor 50 the refractive index of the sapphire glass is taken into account, which index is able to slightly influence the paths of the reflection light rays R.

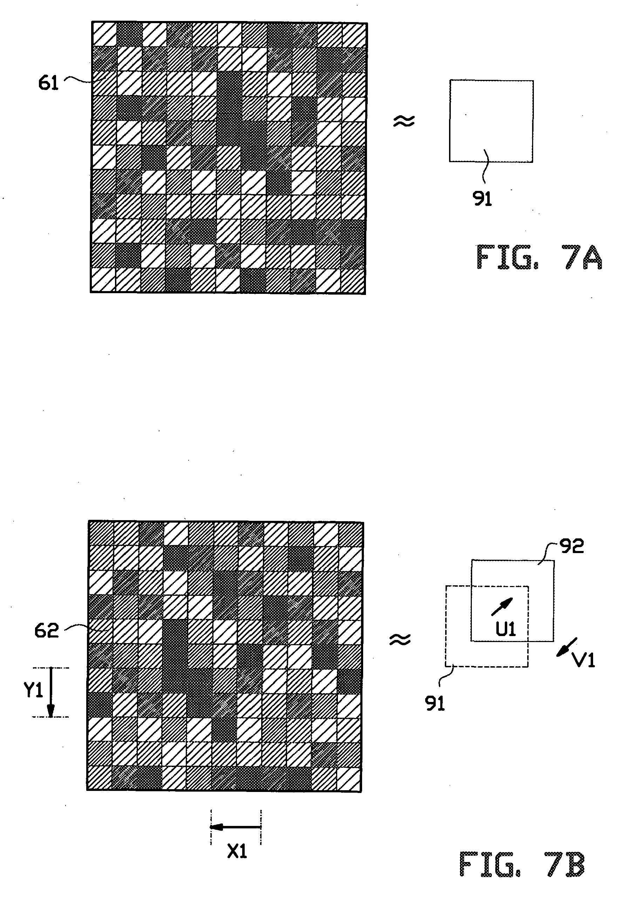

Figure 6 and 7A-D show the working of the optical measuring device 4.

Figure 6 shows the situation in which the light beam L has been emitted by the light source 46 and passes through the transparent sight glass 44 of sapphire glass. The light beam L illuminates the soil 90 that on the outside of the optical measuring device 4 slides past the optical measuring device 4, particularly the part 91 of the soil 90 which at that moment is situated in front of the outer surface 49 of the sight glass 44. The part 91 of the soil 90 that is visible through the sight glass 44 is pressed against the outer surface 49 of the sight glass 44 by the overpressure prevailing at depth E. As a result the sight glass 44 shows a local cross-section of the soil 90. As the measuring device 4 is disposed on the first plate section 26 and the first plate section 26 in case of normal use extends substantially in the vertical plane, the cross-section of the soil 90 in general is a vertical cross-section of the soil 90. The soil 90 has an irregular structure reflecting the light rays of the light beam L irregularly. As a result not all light rays return as reflection light rays R at angle B through the sight glass 44.

The individual photodiodes 51 of the optical sensor 50 detect the reflection light rays R returning at angle B through the sight glass 44, which rays as a result of the irregularities in the structure of the soil 90 have not been reflected everywhere to the same extent. This influences the light intensities that are detected by the individual photodiodes 51.

As shown in figure 6 each photodiode 51 covers an individual part of the sensor surface 55 of the light sensor 50. Each photodiode 51 individually converts the locally detected light intensity into a signal which according to a predetermined ratio corresponds linearly with the detected light intensity. The variations in light intensity are indicated in figures 7A-D by means of different types of hatchings. The legend 60 schematically shows the light intensities corresponding with the hatchings by means of a sun with light rays. The signals of the photodiodes 51 can be processed by the calculation and data processing unit 53 into a two-dimensional reproduction, representation or picture 61 of the detected reflection light rays R detected by the photodiodes 51, which reproduction is divided into segments. The reproduction 61 is representative of the part 91 of the soil 90 which at the moment of the recording was situated in front of the outer surface 49 of the sight glass 44. The resolution of the reproduction 61 depends on the quantity of photodiodes 51 and figure 6 shows an exaggerated low number in order to show how the optical measuring device 4 works in a highly simplified manner. In reality the sensor surface 55 of the optical sensor 50 can be formed by for instance a few hundred to a few thousand photodiodes 51, which results in a higher resolution and a greater accuracy.

Whereas the anchor 1 passes through the penetration path T, as indicated in figure 1, the anchor 1 moves through the soil 90. Also in case of pulling the anchor 1 out of the anchoring ground 9, in a path contrary to the penetration path T, the anchor 1 moves through the soil 90. The soil 90 in both cases moves relative to the optical measuring device 4 attached to the anchor 1. Figures 7A-D show how, during a certain period of time in which the anchor 1 is moving through the soil 90, several parts 91-94 of the soil 90 are situated in front of the outer surface 49 of the sight glass 44. The optical sensor 50 records reflection light rays R reflected by the consecutive parts 91-94 of the soil 90 at a certain constant frequency or a constant interval.

Figures 7A-D show how the signals of the light sensor 50 over a certain period of time have been processed by the calculation and data processing unit 53 into, in this example, four consecutive reproductions 61-64. Each reproduction 61-64 contains a pattern of light intensities representative of the reflection light rays R as reflected by the consecutive parts 91-94 of the soil 90 in the snapshots taken at four consecutive moments in time. The calculation and data processing unit 53 is provided with a storage medium in which each time at least two consecutive reproductions 61-64 can be stored in order to be able to compare them with each other. The frequency of the interval between the reproductions 61-64 is chosen such that the part of the soil 90 that was situated in front of the outer surface 49 of the sight glass 44 during a first of two snapshots taken at consecutive moments in time, is still at least partially present in front of the outer surface 49 of the sight glass 44 during the second snapshot. Preferably the frequency of the snapshots is in the range of approximately twenty-five snapshots per second to a few hundred, preferably a few thousand snapshots per second.

The calculation and data processing unit 53 is provided with electronic circuits that are adapted for recognizing the patterns on the basis of contrasts between the detected light intensities per reproduction 61-64. The calculation and data processing unit 53 then determines the similarities in the recognized patterns between two consecutive reproductions, for instance between the first reproduction 61 and the second reproduction 62, as shown in figures 7A and 7B. Finally the calculation and data processing unit 53 determines a horizontal displacement component X1 and a vertical displacement component Y1 of the second pattern in reproduction 62 with respect to the first pattern in reproduction 61. On the basis of the horizontal displacement component X1 and the vertical displacement component Y1 the relative soil displacement U1 of the second pattern with respect to the first pattern can be determined, which is representative of the relative soil displacement U1 of soil 90 with respect to the optical measuring device 4. With an additional calculation action the calculation and data processing unit 53 is able to convert the relative displacement U1 of the soil 90 with respect to the optical measuring device 4 into an opposite anchor displacement V1 of the optical measuring device 4, and therefore the anchor 1 that is fixedly connected thereto, with respect to the soil 90.

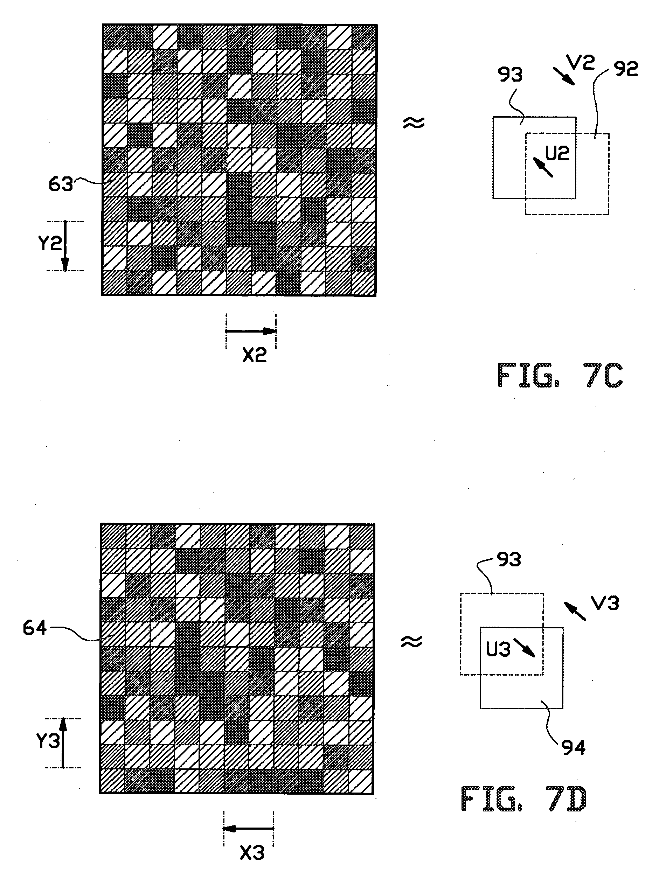

In figure 7C the relative soil displacement U2 of the third part 93 of the soil 90 with respect to the second part 92 of the soil 90 is shown. Said displacement U2 is detected in the manner described above by the light sensor 50 and processed by the calculation and data processing unit 53 into a related value for the relative anchor displacement V2.

In figure 7D the relative soil displacement U3 of the fourth part 94 of the soil 90 with respect to the third part 93 of the soil 90 is shown. Said displacement U3 is detected in the manner described above by the light sensor 50 and processed by the calculation and data processing unit 53 into a related value for the relative anchor displacement V3.

In the measuring device 4 or on the installation ship the data about the relative anchor displacement V1-V3 with respect to the soil 90 are combined with the measuring data of the inclinometer 58 about the pitch and roll of the anchor 1 with respect to the regular position of the anchor 1. Depending on the deviating position of the anchor 1 as measured by the inclinometer 58, the data of the anchor displacement V1 can be adjusted, so that the measured horizontal displacement components X1-X3 and the vertical displacement components Y1-Y3 within the light-sensitive sensor surface 55 do actually correspond with the notional horizontal plane perpendicular to the gravitational direction and the notional vertical plane in which gravity is active, respectively.

The values of the consecutive, optionally adjusted relative anchor displacements V1-V3 are registered by the calculation and data processing unit 53 and are directly communicated via the communication cable 32 and the modem 31 to a calculation and data processing unit at the installation ship. At the installation ship the values of the relative anchor displacements V1-V3 can be visually shown on a display.

By plotting the relative anchor displacement V1-V3 per reproduction 62-64 against the time of said reproductions 62-64, an approximation of the penetration path T can be plotted and the displacement speed of the anchor 1 can be calculated.

Alternatively the rough data, for instance the horizontal displacement component X1-X3 and the vertical displacement component Y1-Y3, can also be transmitted to the installation ship via the modem 31 in order for them to be processed there in the manner described above into values about the relative anchor displacements V1-V3.

In the embodiment described above the optical measuring device 4 is disposed on the first plate section 26, so that the optical sensor 50 at that location is able to perceive a substantially vertical cross-section of the soil 90 through the sight glass 44. In an alternative embodiment that is not shown, the optical measuring device 4, however, is disposed at an inclined surface of the anchor 1, for instance at the first triangular front end 12, the second triangular front end 13, the third plate section 28 or the fourth plate section 29. Also in other types of anchors that are not shown, the optical measuring device 4 can be disposed at a chosen plane, which preferably during the penetration path T is fully surrounded by soil 90. When the optical measuring device 4 is disposed at an anchor at a deviating location at a deviating angle, the optical sensor 50 will be able to perceive a diagonal cross-section of the soil 90 through the sight glass 44. The measured displacement components will then represent different directional data about the relative displacement of the anchor 1 with respect to the soil 90.

In an alternative embodiment that is not shown, the anchor 1 is provided with a second optical measuring device that preferably is placed at right angles to the optical measuring device 4 described above. Such a second optical measuring device 4 is able to provide additional data, for instance about a third directional component. In that way the penetration path T of the anchor 1 can be determined in three dimensions.

The above description is included to illustrate the operation of preferred embodiments of the invention and not to limit the scope of the invention. Starting from the above explanation many variations that fall within the scope of the present invention as claimed will be evident to an expert.

## Claims

1. Anchor (1) with a measuring device (4) that is fixedly attached to the anchor for measuring the displacement (U1-U3) of the soil (90) with respect to the anchor, wherein the measuring device (4) is provided with a light source (46) and an optical sensor (50), wherein the light source when operational emits a light beam illuminating a part of the soil opposite the measuring device, wherein the soil reflects at least a part of the light of the light beam in the direction of the measuring device, wherein the optical sensor (50) comprises a light-sensitive sensor surface (55) divided into segments (51), which surface per segment converts the light incident at the location of the segments into an electric signal which according to a predetermined ratio corresponds with the intensity of the incident light, wherein the measuring device is operationally connected to a calculation and data processing unit (53) that converts the signals into a reproduction divided into segments, wherein the calculation and data processing unit is provided with a storage medium for storing reproductions at least at two consecutive moments in time and an electric circuit for recognising patterns in each of the stored reproductions, comparing the recognised patterns of two consecutive reproductions and on the basis of the comparison determining the displacement (X1,Y1) of the pattern between the two consecutive moments in time.

2. Anchor (1) according to claim 1, wherein the optical sensor (50) comprises a plurality of light detectors (51) that jointly form the segments of the light-sensitive sensor surface (55).

3. Anchor (1) according to claim 1 or 2, wherein the segments (51) of the light-sensitive sensor surface (55) are arranged in several rows and columns.

4. Anchor (1) according to any one of the preceding claims, wherein the light source (46) is provided with a light emitting diode or a laser.

5. Anchor (1) according to any one of the claims 2-4, wherein the light detectors (51) comprise photodiodes.

6. Anchor (1) according to any one of the preceding claims, wherein the measuring device (4) comprises a housing (40) that is provided with an inspection opening (43) having a substantially transparent sight glass (44) in it, wherein the optical sensor (50) is placed behind the sight glass in the housing and in the path of the light incident through the sight glass, wherein the sight glass (44) is preferably made of sapphire glass, particularly artificial sapphire glass, particularly artificial sapphire glass of crystallised aluminium oxide.

7. Anchor (1) according to any one of the preceding claims, wherein the measuring device (4) is provided with a lens (47) in the path of the reflected light, wherein the focal distance of the lens is situated in or at the light-sensitive sensor surface (55).

8. Anchor (1) according to any one of the preceding claims, wherein the anchor has a longitudinal plane of symmetry (M), wherein the light-sensitive sensor surface (55) extends substantially parallel to the longitudinal plane of symmetry.

9. Anchor (1) according to any one of the preceding claims, wherein the anchor comprises a fluke (10) and a shank (20) that is upright with respect to the fluke, wherein the shank comprises a plate section (26) extending substantially parallel to the longitudinal plane of symmetry and bearing the measuring device (4).

10. Anchor (1) according to any one of the preceding claims, wherein the anchor is provided with an inclinometer (58).

11. Anchor (1) according to any one of the preceding claims, wherein the calculation and data processing unit (53) is accommodated in the housing (40).

12. Anchor (1) according to any one of the preceding claims, wherein the anchor is provided with a transmitter (31) for wireless data transmission from the transmitter to a vessel located at the water surface.

13. Anchor (1) according to claim 12, wherein the calculation and data processing unit (53) is disposed on the vessel.

14. Method for measuring the anchor displacement of an anchor (1) in soil (90) of an anchoring ground, wherein the anchor (1) is provided with a measuring device (4) that is fixedly attached to the anchor for measuring displacement (U1-U3) of the soil with respect to the anchor, wherein the measuring device (4) is provided with a light source (46) and an optical sensor (50), wherein the optical sensor comprises a plurality of light detectors (51) that jointly form a light-sensitive sensor surface (50), wherein each light detector covers a segment of the light-sensitive sensor surface, wherein the measuring device is operationally connected to a calculation and data processing unit (53) that is provided with a storage medium and an electric circuit, wherein the method comprises: exerting a pulling force (N) on an anchoring line (8) connected to the anchor in order to introduce the anchor into soil of an anchoring ground according to a penetration path (P); by means of the light source (46) emitting a light beam, wherein the light beam illuminates a part of the soil (90) opposite the measuring device, wherein the soil reflects at least a part of the light of the light beam in the direction of the measuring device, by means of the light detectors (51) converting light incident at the location of the segments and reflected from the soil into electric signals which according to a predetermined ratio correspond with the intensity of the incident light per segment; at a first moment by means of the calculation and data processing unit (53) converting the electric signals of the light detectors (51) into a first reproduction divided into segments; storing the first reproduction in the storage medium; at a second moment consecutive to the first moment by means of the calculation and data processing unit (53) converting the electric signals of the light detectors (51) into a second reproduction divided into segments; storing the second reproduction in the storage medium; by means of the electric circuit recognising patterns in the first reproduction and the second reproduction; comparing the recognised patterns of the first reproduction and the second reproduction; on the basis of the comparison determining the displacement (X1,Y1) of the pattern between the first reproduction and the second reproduction.

15. Method according to claim 14, wherein the anchor (1) is provided with an inclinometer (58), wherein the method comprises: on the basis of the data of the inclinometer determining the position of the anchor during measuring the displacement (X1,Y1) of the pattern, adjusting the measured displacement of the pattern on the basis of the deviation of the position of the anchor with respect to its regular horizontal position.

## Patentansprüche

1. Anker (1) mit einer Messeinrichtung (4), die fest mit dem Anker verbunden ist, um die Verlagerung (U1 - U3) des Schlamms (90) in Bezug auf den Anker zu messen, wobei die Messeinrichtung (4) mit einer Lichtquelle (46) und einem optischen Sensor (50) versehen ist, wobei die Lichtquelle (46) im Betrieb einen Lichtstrahl aussendet, der einen Bereich des Schlamms gegenüber der Messeinrichtung beleuchtet, wobei der Schlamm wenigstens einen Teil des Lichts des Lichtstrahls in die Richtung der Messeinrichtung reflektiert, wobei der optische Sensor (50) eine lichtempfindliche, in Segmente (51) unterteilte Sensoroberfläche (55) aufweist, wobei die Oberfläche pro Segment das an dem Ort der Segmente einfallende Licht in ein elektrisches Signal umwandelt, das nach Maßgabe eines vorbestimmten Verhältnisses der Intensität des einfallenden Lichts entspricht, wobei die Messeinrichtung operativ mit einer Rechen- und Datenverarbeitungseinheit (53) verbunden ist, die die Signale in eine in Segmente unterteilte Abbildung umwandelt, wobei die Rechen- und Datenverarbeitungseinheit mit einem Speichermedium zum Speichern der Abbildungen von wenigstens zwei aufeinander folgenden Zeitpunkten und mit einer elektrischen Schaltung zum Erkennen von Mustern in jeder der gespeicherten Abbildungen, zum Vergleichen der erkannten Muster in zwei aufeinander folgenden Abbildungen und zum Bestimmen der Verlagerung (X1, Y1) auf der Basis des Vergleichs des Musters zwischen zwei aufeinander folgenden Zeitpunkten versehen ist.

2. Anker (1) nach Anspruch 1, wobei der optische Sensor (50) eine Vielzahl von Lichtdetektoren (51) aufweist, die zusammen die Segmente der lichtempfindlichen Sensoroberfläche (55) bilden.

3. Anker (1) nach Anspruch 1 oder 2, wobei die Segmente (51) der lichtempfindlichen Sensoroberfläche (55) in Zeilen und Spalten angeordnet sind.

4. Anker (1) nach einem der vorhergehenden Ansprüche, wobei die Lichtquelle (46) mit einer Leuchtdiode oder einem Laser ausgestattet ist.

5. Anker (1) nach einem der Ansprüche 2 - 4, wobei die Lichtdetektoren (51) Photodioden aufweisen.

6. Anker (1) nach einem der vorhergehenden Ansprüche, wobei die Messeinrichtung (4) ein Gehäuse (40) aufweist, das eine Inspektionsöffnung (43) mit einem im Wesentlichen transparenten Beobachtungsfenster (44) darin aufweist, wobei der optische Sensor (50) hinter dem Beobachtungsfenster im Gehäuse und im Strahlengang von durch das Beobachtungsfenster einfallendem Licht angeordnet ist, wobei das Beobachtungsfenster (44) vorzugsweise aus Saphirglas hergestellt ist, insbesondere aus künstlichem Saphirglas, insbesondere künstlichem Saphirglas aus kristallisiertem Aluminiumoxid.

7. Anker (1) nach einem der vorhergehenden Ansprüche, wobei die Messeinrichtung (4) mit einer Linse (47) im Strahlengang des reflektierten Lichts versehen ist, wobei die Brennweite der Linse in oder auf der lichtempfindlichen Sensoroberfläche (55) liegt.

8. Anker (1) nach einem der vorhergehenden Ansprüche, wobei der Anker eine Längssymmetrieebene (M) hat, wobei die lichtempfindliche Sensoroberfläche (55) im Wesentlichen parallel zu der Längssymmetrieebene verläuft.

9. Anker (1) nach einem der vorhergehenden Ansprüche, wobei der Anker eine Ankerschaufel (10) und einen Ankerschaft (20) aufweist, der aufrecht in Bezug auf die Ankerschaufel ist, wobei der Ankerschaft einen Plattenabschnitt (26) hat, der im Wesentlichen parallel zu der Längssymmetrieebene verläuft und die Messeinrichtung (4) trägt.

10. Anker (1) nach einem der vorhergehenden Ansprüche, wobei der Anker mit einem Neigungsmesser (58) versehen ist.

11. Anker (1) nach einem der vorhergehenden Ansprüche, wobei die Rechen- und Datenverarbeitungseinheit (53) in dem Gehäuse (40) untergebracht ist.

12. Anker (1) nach einem der vorhergehenden Ansprüche, wobei der Anker mit einem Sender (31) zur drahtlosen Datenübertragung von dem Sender zu einem an der Wasseroberfläche befindlichen Schiff versehen ist.

13. Anker (1) nach Anspruch 12, wobei die Rechen- und Datenverarbeitungseinheit (53) sich auf dem Schiff befindet.

14. Verfahren zum Messen der Verlagerung eines Ankers (1) im Schlamm (90) eines Ankergrundes, wobei der Anker (1) mit einer Messeinrichtung (4) versehen ist, die fest an dem Anker zum Messen der Verlagerung (U1 - U3) des Schlamms in Bezug auf den Anker angebracht ist, wobei die Messeinrichtung (4) mit einer Lichtquelle (46) und einem optischen Sensor (50) versehen ist, wobei der optische Sensor eine Vielzahl von Lichtdetektoren (51) aufweist, die gemeinsam eine lichtempfindliche Sensoroberfläche (50) bilden, wobei jeder Lichtdetektor ein Segment der lichtempfindlichen Sensoroberfläche abdeckt, wobei die Messeinrichtung operativ mit einer Rechen- und Datenverarbeitungseinheit (53) verbunden ist, die mit einem Speichermedium und einer elektrischen Schaltung ausgestattet ist, wobei bei dem Verfahren: eine Zugkraft (N) auf ein mit dem Anker verbundenes Ankerseil (8) ausgeübt wird, um den Anker in den Schlamm eines Ankergrundes gemäß einem Eindringweg (P) einzuführen, mittels der Lichtquelle (46) ein Lichtstrahl abgestrahlt wird, wobei der Lichtstrahl einen Bereich des Schlamms (90) gegenüber der Messeinrichtung beleuchtet, wobei der Schlamm wenigstens einen Teil des Lichtes des Lichtstrahls in die Richtung der Messeinrichtung reflektiert, das am Ort der Segmente auftreffende und von dem Schlamm reflektierte Licht mittels der Lichtdetektoren (51) in elektrische Signale umgewandelt wird, die gemäß einem vorbestimmten Verhältnis den Intensitäten des auf die Segmente einfallenden Lichts entsprechen, zu einem ersten Zeitpunkt die elektrischen Signale der Lichtdetektoren (51) durch die Rechen- und Datenverarbeitungseinheit (53) in eine erste, in Segmente unterteilte Abbildung umgewandelt wird, die erste Abbildung in dem Speichermedium gespeichert wird, zu einem zweiten, auf den ersten Zeitpunkt folgenden Zeitpunkt die elektrischen Signale der Lichtdetektoren (51) mittels der Rechen- und Datenverarbeitungseinheit (53) in eine zweite, in Segmente unterteilte Abbildung umgewandelt wird, die zweite Abbildung in dem Speichermedium gespeichert wird, mittels der elektrischen Schaltung Muster in der ersten Abbildung und in der zweiten Abbildung erkannt werden, die erkannten Muster der ersten Abbildung und der zweiten Abbildung verglichen werden, die Verlagerung (X1, Y1) der Muster zwischen der ersten Abbildung und der zweiten Abbildung aufgrund des Vergleichs bestimmt wird.

15. Verfahren nach Anspruch 14, wobei der Anker (1) mit einem Neigungsmesser (58) versehen ist, wobei bei dem Verfahren: auf der Basis der Daten des Neigungsmessers die Stellung des Ankers während der Messung der Verlagerung (X1, Y1) des Musters bestimmt wird, die gemessene Verlagerung der Muster auf Basis der Abweichung der Stellung des Ankers in Bezug auf seine reguläre horizontale Stellung angepasst wird.

## Revendications

1. Ancre (1) avec un dispositif de mesure (4) qui est attaché de manière fixe à l'ancre pour mesurer le déplacement (U1-U3) du sol (90) par rapport à l'ancre, dans laquelle le dispositif de mesure (4) est prévu avec une source de lumière (46) et un capteur optique (50), dans laquelle la source de lumière, lorsqu'elle est opérationnelle, émet un faisceau lumineux éclairant une partie du sol opposée au dispositif de mesure, dans laquelle le sol réfléchit au moins une partie de la lumière du faisceau lumineux dans la direction du dispositif de mesure, dans laquelle le capteur optique (50) comprend une surface de capteur sensible à la lumière (55) divisée en segments (51), laquelle surface par segment convertit la lumière incidente à l'emplacement des segments en un signal électrique qui, selon un rapport prédéterminé, correspond à l'intensité de la lumière incidente, dans laquelle le dispositif de mesure est raccordé de manière opérationnelle à une unité de calcul et de traitement de données (53) qui convertit les signaux en une reproduction divisée en segments, dans laquelle l'unité de calcul et de traitement de données est prévue avec un support de stockage pour stocker des reproductions au moins à deux moments consécutifs dans le temps et un circuit électrique pour reconnaître des modèles dans chacune des reproductions stockées, comparant les modèles reconnus des deux reproductions consécutives et sur la base de la comparaison déterminant le déplacement (X1, Y1) du modèle entre les deux moments consécutifs dans le temps.

2. Ancre (1) selon la revendication 1, dans laquelle le capteur optique (50) comprend une pluralité de détecteurs de lumière (51) qui, conjointement, forment les segments de la surface de capteur sensible à la lumière (55).

3. Ancre (1) selon la revendication 1 ou 2, dans laquelle les segments (51) de la surface de capteur sensible à la lumière (55) sont agencés sur plusieurs rangées et colonnes.

4. Ancre (1) selon l'une quelconque des revendications précédentes, dans laquelle la source de lumière (46) est prévue avec une diode électroluminescente ou un laser.

5. Ancre (1) selon l'une quelconque des revendications 2 à 4, dans laquelle les détecteurs de lumière (51) comprennent des photodiodes.

6. Ancre (1) selon l'une quelconque des revendications précédentes, dans laquelle le dispositif de mesure (4) comprend un boîtier (40) qui est prévu avec une ouverture de contrôle (43) ayant un hublot de regard (44) sensiblement transparent dans cette dernière, dans laquelle le capteur optique (50) est placé derrière le hublot de regard dans le boîtier et dans la trajectoire de la lumière incidente à travers le hublot de regard, dans laquelle le hublot de regard (44) est de préférence réalisé à partir de glace saphir, en particulier de la glace saphir artificielle, en particulier de la glace saphir artificielle d'oxyde d'aluminium cristallisé.

7. Ancre (1) selon l'une quelconque des revendications précédentes, dans laquelle le dispositif de mesure (4) est prévu avec une lentille (47) dans la trajectoire de la lumière réfléchie, dans laquelle la distance focale de la lentille est située dans ou au niveau de la surface de capteur sensible à la lumière (55).

8. Ancre (1) selon l'une quelconque des revendications précédentes, dans laquelle l'ancre a un plan de symétrie (M) longitudinal, dans laquelle la surface de capteur sensible à la lumière (55) s'étend de manière sensiblement parallèle au plan de symétrie longitudinal.

9. Ancre (1) selon l'une quelconque des revendications précédentes, dans laquelle l'ancre comprend une patte (10) et une tige (20) qui est droite par rapport à la patte, dans laquelle la tige comprend une section de plaque (26) s'étendant de manière sensiblement parallèle au plan de symétrie longitudinal et supportant le dispositif de mesure (4).

10. Ancre (1) selon l'une quelconque des revendications précédentes, dans laquelle l'ancre est prévue avec un inclinomètre (58).

11. Ancre (1) selon l'une quelconque des revendications précédentes, dans laquelle l'unité de calcul et de traitement de données (53) est logée dans le boîtier (40).

12. Ancre (1) selon l'une quelconque des revendications précédentes, dans laquelle l'ancre est prévue avec un émetteur (31) pour la transmission de données sans fil, de l'émetteur à un navire situé à la surface de l'eau.

13. Ancre (1) selon la revendication 12, dans laquelle l'unité de calcul et de traitement des données (53) est disposée sur le navire.

14. Procédé pour mesurer le déplacement d'ancre d'une ancre (1) dans le sol (90) d'un terrain d'ancrage, dans lequel l'ancre (1) est prévue avec un dispositif de mesure (4) qui est attaché de manière fixe à l'ancre pour mesurer le déplacement (U1-U3) du sol par rapport à l'ancre, dans lequel le dispositif de mesure (4) est prévu avec une source de lumière (46) et un capteur optique (50), dans lequel le capteur optique comprend une pluralité de détecteurs de lumière (51) qui, conjointement, forment une surface de capteur sensible à la lumière (50), dans lequel chaque détecteur de lumière couvre un segment de la surface de capteur sensible à la lumière, dans lequel le dispositif de mesure est raccordé de manière opérationnelle à une unité de calcul et de traitement de données (53) qui est prévue avec un support de stockage et un circuit électrique, dans lequel le procédé comprend les étapes consistant à : exercer une force de traction (N) sur une ligne d'ancrage (8) raccordée à l'ancre afin d'introduire l'ancre dans le sol d'un terrain d'ancrage selon une trajectoire de pénétration (P) ; au moyen de la source de lumière (46) émettre un faisceau lumineux, dans lequel le faisceau de lumière éclaire une partie du sol (90) opposée au dispositif de mesure, dans lequel le sol réfléchit au moins une partie de la lumière du faisceau lumineux dans la direction du dispositif de mesure, au moyen des détecteurs de lumière (51), convertir la lumière incidente à l'emplacement des segments et réfléchie par le sol en signaux électriques qui, selon un rapport prédéterminé correspondent à l'intensité de la lumière incidente par segment; à un premier moment au moyen de l'unité de calcul et de traitement de données (53), convertir les signaux électriques des détecteurs de lumière (51) en une première reproduction divisée en segments ; stocker la première reproduction dans le support de stockage ; à un second moment consécutif au premier moment, au moyen de l'unité de calcul et de traitement de données (53), convertir les signaux électriques des détecteurs de lumière (51) en une seconde reproduction divisée en segments ; stocker la seconde reproduction dans le support de stockage ; au moyen du circuit électrique, reconnaître les modèles dans la première reproduction et la seconde reproduction ; comparer les modèles reconnus de la première reproduction et de la seconde reproduction ; sur la base de la comparaison, déterminer le déplacement (X1, Y1) du modèle entre la première reproduction et la seconde reproduction.

15. Procédé selon la revendication 14, dans lequel l'ancre (1) est prévue avec un inclinomètre (58), dans lequel le procédé comprend les étapes consistant à : sur la base des données de l'inclinomètre, déterminer la position de l'ancre pendant la mesure du déplacement (X1, Y1) du modèle, ajuster le déplacement mesuré du modèle sur la base de l'écart de la position de l'ancre par rapport à sa position horizontale régulière.
